**Europäisches Patentamt**

**European Patent Office**

**Office européen des brevets**

(19)

(11) Veröffentlichungsnummer: **0 084 520**
**B1**

(12) **EUROPÄISCHE PATENTSCHRIFT**

(45) Veröffentlichungstag der Patentschrift:
**29.05.85**

(51) Int. Cl.⁴: **B 01 D 35/12**

(21) Anmeldenummer: **83810012.1**

(22) Anmeldetag: **13.01.83**

(54) **Filtersystem.**

(30) Priorität: **19.01.82 GB 8201365**

(43) Veröffentlichungstag der Anmeldung:
**27.07.83 Patentblatt 83/30**

(45) Bekanntmachung des Hinweises auf die Patenterteilung:
**29.05.85 Patentblatt 85/22**

(84) Benannte Vertragsstaaten:
**BE CH DE FR GB IT LI**

(56) Entgegenhaltungen:
**FR - A - 1 427 309**
**FR - A - 2 095 426**
**GB - A - 556 304**
**GB - A - 1 340 726**
**GB - A - 2 014 467**
**GB - A - 2 015 891**
**US - A - 2 434 427**
**US - A - 3 979 292**

(73) Patentinhaber: **CIBA-GEIGY AG, Postfach,
CH-4002 Basel (CH)**

(72) Erfinder: **Blake, Colin Charles, 23 Sutton Road, Rochford
Essex (GB)**
Erfinder: **Goodall, Charles Clifford Owen, 2 Inverness
Drive, Hainault Ilford Essex (GB)**
Erfinder: **Bacon, Paul Anthony, 52 Malvern Road,
Hornchurch Essex (GB)**

## Beschreibung

Vorliegende Erfindung betrifft ein Filtriersystem zur Entfernung von suspendierten Feststoffen aus einer Flüssigkeit.

In vielen Fällen ist die Entfernung von suspendierten Feststoffen aus einer Flüssigkeit erforderlich, und dies geschieht häufig unter Verwendung eines Filtriersystems mit einem Filtersack oder einer Patrone in einem Filtergefäß. Wenn der Filtersack oder die Patrone mit dem herausfiltrierten Feststoff voll oder verstopft ist, so daß das Filtriersystem nicht mehr betriebsfähig ist, muß das System abgestellt und der Filtersack oder die Patrone ausgewechselt werden. Es ist jedoch oft lästig, die Filtration anhalten zu müssen, und deshalb werden manchmal zwei Filtergefäße parallel angeordnet, wobei das eine zum Filtrieren verwendet wird, während das andere zum Auswechseln des Sacks oder der Patrone geöffnet werden kann. Dies ist jedoch meist eine unsaubere Prozedur, da es schwierig ist, Flüssigkeit aus dem abgesperrten Filtergefäß abzulassen, insbesondere wenn wie üblich das Filtriersystem unter Druck steht.

Verschiedene Filtersysteme wurden beschrieben, in denen zwei Filter parallel angeordnet sind. Beispielsweise sind unterschiedliche, zwei parallel angeordnete Filter enthaltende Filtersysteme in den folgenden Patentschriften beschrieben: Britische Patentschriften Nr. 556 304, 1 340 726, 2 014 467 und 2 015 891, U.S. Patentschriften 2 434 427 und 3 979 292 sowie in der französischen Patentschrift 2 095 426. Jedoch wird bei keiner von diesen ein herausnehmbarer Filtersack oder eine herausnehmbare Patrone eingesetzt. Bei den meisten Patentschriften wird eine Rückspülmethode angewendet, um das nicht in Betrieb befindliche Filter zu reinigen. Solche Rückspülmethoden sind nicht anwendbar, wenn in einem Filtersystem ein herausnehmbares Filter oder eine herausnehmbare Patrone eingesetzt werden.

Es wurde nun ein Druckfiltriersystem mit zwei parallelen Filtergefäßen gefunden, bei dem die Flüssigkeit aus dem nicht im Betrieb befindlichen Filtergefäß abgelassen werden kann, bevor der volle Filtersack bzw. die Patrone herausgenommen wird.

Gegenstand vorliegender Erfindung ist ein Druckfiltriersystem zur Entfernung von suspendierten Feststoffen aus einer Flüssigkeit, bestehend aus zwei umschlossenen, parallel angeordneten Filtergefäßen, die je entweder einen herausnehmbaren Filtersack oder eine herausnehmbare Patrone enthalten und in der Umlaufleitung einer die Flüssigkeit aus einem Hauptvorratsgefäß jeweils nur durch ein Filtergefäß pumpenden Pumpe angeordnet sind, wobei dies durch ein Ventilsystem in der Umlaufleitung zu den Filtergefäßen gesteuert wird, wobei die durch das im Betrieb befindliche Filtergefäß gedrückte Flüssigkeit über ein in der Ausflußleitung des jeweiligen Gefäßes angeordnetes Rückschlagventil in ein Flüssigkeitsvorratsgefäß gepumpt wird, wobei der Auslaß jeden Gefäßes einen Verbindungsstutzen zu einem Pendelventil aufweist, dessen Auslaß über ein Rückschlagventil mit der Ansaugseite der Pumpe verbunden ist, wodurch beim Pumpen von Flüssigkeit durch das eine Gefäß das Pendelventil gegen die Strömung der Flüssigkeit durch dieses hindurch gesperrt, aber auf der anderen Seite offen ist, so daß Flüssigkeit aus dem anderen Gefäß angesaugt werden kann.

Vorzugsweise besteht das Ventilsystem in der Flüssigkeitsumlaufleitung zur Steuerung der Flüssigkeitszufuhr in das Filtergefäß aus einem elektrisch gesteuerten Magnetventil in der Flüssigkeitszufuhrleitung zu jedem Gefäß. Auch kann ein pneumatisch betätigtes Ventil in der Flüssigkeitszufuhrleitung zu jedem Gefäß vorhanden sein.

Vorzugsweise dient ein druckempfindlicher Schalter dazu, festzustellen und anzuzeigen, wenn ein Filtergefäß zu voll mit Feststoff ist, um gut funktionieren zu können. Besonders bevorzugt sind Vorrichtungen zur Betätigung des Ventilsystems in der Flüssigkeitsumlaufleitung mit dem druckempfindlichen Schalter verbunden, um das eine Gefäß abzusperren und die Flüssigkeit durch das andere Gefäß gepumpt werden zu lassen.

Bei einer Ausführungsform sind Vorrichtungen zum Abstellen der Pumpe und somit zum Anhalten des Flüssigkeitsumlaufs, wenn die Säcke oder Patronen in beiden Filtergefäßen zu voll sind und das Filter nicht mehr gut funktionieren kann, vorgesehen, d. h. wenn der Sack oder die Patrone im nächsten Gefäß nicht ausgewechselt worden ist.

Vorzugsweise sind die Rückschlagventile in den Flüssigkeitsauslaßleitungen aus den beiden Filtergefäßen und das Pendelventil Schwimmrückschlagventile.

Vorzugsweise ist an jedem Filtergefäß ein Luftrückstrahlventil gegen Vakuum abgebracht. Dies dient dazu, zu verhindern, daß in einem Filtergefäß beim Absaugen der Flüssigkeit ein hohes Vakuum entsteht.

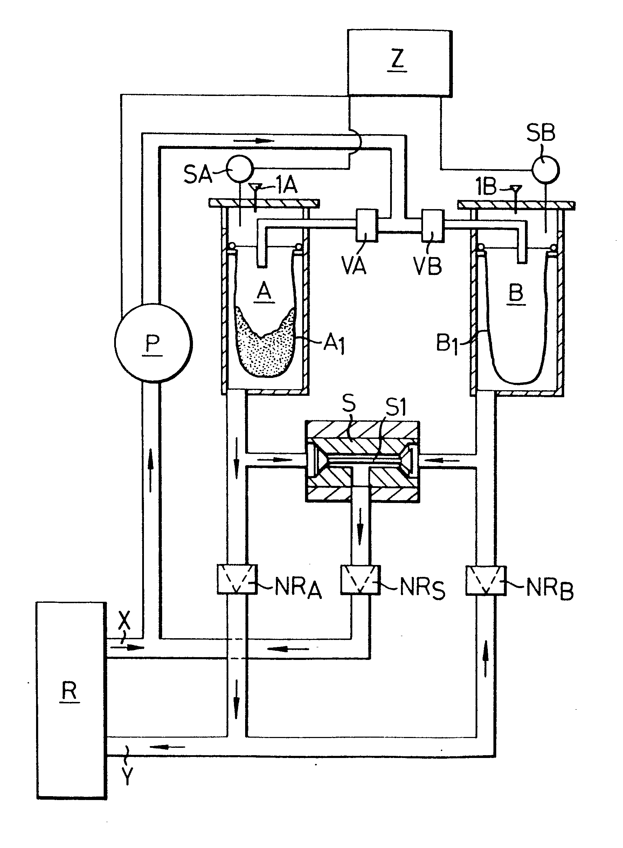

Die Zeichnung dient der Erläuterung der Erfindung.

Die Figur ist ein Fließbild, halb im Schnitt, eines erfindungsgemäßen Filtriersystems.

In der Figur ist das Filtriersystem an ein Flüssigkeitsvorratsreservoir R angeschlossen, das suspendierte Feststoffe enthält, die daraus mittels eines Einlaßrohrs X und Auslaßrohrs Y entfernt werden müssen.

Das Filtriersystem besteht aus zwei Druckfiltergefäßen A und B, die je Filtersäcke $A_1$ und $B_1$ enthalten, und einer Flüssigkeitsumlaufpumpe P, welche die Flüssigkeit aus dem Vorratsbehälter R durch das System pumpt, wie durch die Flüssigkeitsströmungspfeile angezeigt.

In den Flüssigkeitszufuhrleitungen zu den Gefäßen A und B befinden sich zwei elektrisch gesteuerte Magnetventile $V_A$ und $V_B$. Nur eines die-

ser Ventile kann gleichzeitig offen sein.

Am Kopf der beiden Gefäße A und B sind je zwei druckempfindliche Schalter SA und SB angeordnet, die mit einem elektronischen Steuerschrank Z verbunden sind. Diese Schalter sprechen auf Druckänderungen in den Gefäßen A und B an; wenn der Druck eine vorgegebene Höhe erreicht, wird das eine Ventil $V_A$ bzw. $V_B$ geschlossen und das andere geöffnet. Ferner sind am Kopf jeden Gefäßes zwei Luftrückschlagventile $I_A$ und $I_B$ angeordnet. Diese Ventile wirken gegen Vakuum.

Im Flüssigkeitskreislauf unter den zwei Gefäßen A und B befindet sich ein Pendelventil S mit einem Pendelkörper $S_1$.

Drei Schwimmrückschlagventile $NR_A$, $NR_B$ und $NR_S$ sind in den Flüssigkeitsauslaßleitungen der Gefäße A und B bzw. des Pendelventils S angeordnet.

Im Betrieb wird die im Reservoir enthaltene und eine Dispersion fester Teilchen enthaltende, zu filtrierende Flüssigkeit durch die Pumpe P aus dem Reservoir R über den Einlaß X angesaugt.

Die Flüssigkeit wird dann durch das eine oder andere Filtergefäß A oder B gepumpt. Die Wahl des verwendeten Filtergefäßes erfolgt durch die entsprechenden Zustände der beiden Ventile $V_A$ und $V_B$. In der Figur ist $V_A$ in der offenen Stellung und $V_B$ ist geschlossen.

Die suspendierten Feststoffe sammeln sich in dem Filtersack A. Die filtrierte Flüssigkeit wird dann aus dem Filtergefäß A gedrückt und fließt über den Auslaß Y zum Reservoir R zurück.

In diesem Zustand steht der Pendelkörper $S_1$ auf der linken Seite unter Druck und stellt eine Dichtung gegen die aus Filter A abströmende Flüssigkeit dar. Zusätzlich verhindert das Rückschlagventil $NR_B$ eine Strömung der unter Druck stehenden Flüssigkeit in das Filtergefäß B. Es besteht jedoch ein freier Weg vom Filtergefäß B durch die rechte Seite des Pendelventils S zurück zur Ansaugseite der Pumpe P. Somit wir gegebenenfalls im Filtergefäß B vorhandene Flüssigkeit über diesen Weg herausgesaugt.

Wenn sich im Filtergefäß A eine erhebliche Menge festes Material angesammelt hat und der Flüssigkeitsdruck über dem Filtersack A auf eine vorgewählte Höhe gestiegen ist, wird dies von dem Druckschalter $S_A$ festgestellt, der über die Steuerelektronik das Ventil $V_A$ schließen und das Ventil $V_B$ öffnen läßt.

Es ist ersichtlich, daß die oben beschriebene Flüssigkeitsströmung dabei so umgeändert wird, daß das Filtergefäß B nun zum Filtrieren der Flüssigkeit dient, während die Flüssigkeit automatisch über das Pendelventil S und die Pumpe aus dem Filtergefäß A abgezogen wird.

Der Filtersack aus A kann leicht in halbtrockenem Zustand herausgenommen und ein Ersatzfilter ohne Betriebsunterbrechung des Systems eingesetzt werden.

Wenn die Filtergefäße sich in der in der Figur gezeigten Stellung befinden, d. h. wenn Flüssigkeit durch das Gefäß A gepumpt wird, aber die Flüssigkeit aus dem Gefäß B abgezogen wurde, wird eine geringe Menge Luft von der Pumpe durch das Gefäß B und das Pendelventil S gesaugt, aber dies kann durch die Auslegung des Strömungssystems minimiert werden. Wenn nötig, kann auch der Pendelkörper S lose in den Pendelkanal passend gemacht werden, so daß eine geringe Menge Flüssigkeit aus dem Gefäß A in das und aus dem Pendelventil strömen kann.

Das erfindungsgemäße Filtriersystem ist besonders nützlich, wenn die abfiltrierten Feststoffe zur Weiterverarbeitung zurückgewonnen werden müssen, da sie in einem halbtrockenen kompakten Zustand anfallen.

## Patentansprüche

1. Druckfiltriersystem zur Entfernung von suspendierten Feststoffen aus einer Flüssigkeit, bestehend aus zwei umschlossenen, parallel angeordneten Filtergefäßen (A und B), die je entweder einen herausnehmbaren Filtersack oder eine herausnehmbare Patrone ($A_1$ und $B_1$) enthalten und in der Umlaufleitung einer die Flüssigkeit aus einem Hauptvorratsgefäß (R) jeweils nur durch ein Filtergefäß pumpenden Pumpe (P) angeordnet sind, wobei dies durch ein Ventilsystem in der Umlaufleitung zu den Filtergefäßen gesteuert wird, wobei die durch das im Betrieb befindliche Filtergefäß gedrückte Flüssigkeit über ein in der Ausflußleitung des jeweiligen Filtergefäßes angeordnetes Rückschlagventil ($NR_A$, $NR_B$) in ein Vorratsgefäß (R) gepumpt wird, dadurch gekennzeichnet, daß der Auslaß jedes Filtergefäßes einen Verbindungsstutzen zu einem Pendelventil (S) aufweist, dessen Auslaß über ein Rückschlagventil ($NR_S$) mit der Ansaugseite der Pumpe (P) verbunden ist, wodurch beim Pumpen von Flüssigkeit durch das eine Filtergefäß das Pendelventil gegen die Strömung der Flüssigkeit durch dieses hindurch gesperrt, aber auf der anderen Seite offen ist, so daß Flüssigkeit aus dem anderen Filtergefäß angesaugt werden kann.

2. Druckfiltriersystem nach Anspruch 1, dadurch gekennzeichnet, daß das Ventilsystem in der Flüssigkeitsumlaufleitung zur Steuerung der Flüssigkeitszufuhr in die Filtergefäße aus einem elektrisch gesteuerten Magnetventil (VA, VB) in der Flüssigkeitszufuhrleitung zu jedem Filtergefäß besteht.

3. Druckfiltriersystem nach Anspruch 1 oder 2, dadurch gekennzeichnet, daß den Filtergefäßen jeweils ein druckempfindlicher Schalter (SA, SB) zugeordnet ist, der dazu dient, festzustellen und anzuzeigen, wenn ein Filtergefäß zu voll mit Feststoff ist.

4. Druckfiltriersystem nach Anspruch 3, dadurch gekennzeichnet, daß Vorrichtungen (Z) zur Betätigung des Ventilsystems in der Flüssigkeitsumlaufleitung mit den druckempfindlichen Schaltern (SA, SB) verbunden sind, um das eine Filtergefäß abzusperren und die Flüssigkeit durch das andere Filtergefäß zu pumpen.

5. Druckfiltriersystem nach einem der Ansprüche 1 bis 4, dadurch gekennzeichnet, daß Vorrichtungen zum Abstellen der Pumpe und somit zum Anhalten des Flüssigkeitsumlaufs, wenn die Säcke oder Patronen in beiden Filtergefäßen zu voll sind, vorgesehen sind.

6. Druckfiltriersystem nach einem der Ansprüche 1 bis 5, dadurch gekennzeichnet, daß die Rückschlagventile in den Flüssigkeitsauslaßleitungen der beiden Filtergefäße und des Pendelventils Schwimmrückschlagventile ($NR_A$, $NR_S$, $NR_B$) sind.

7. Druckfiltriersystem nach einem der Ansprüche 1 bis 6, dadurch gekennzeichnet, daß an jedem Filtergefäß ein Luftrückschlagventil (1A, 1B) gegen Vakuum angebracht ist.

## Claims

1. A pressurised filtration system for removing suspended solids from a liquid which comprises two enclosed filter vessels (A and B) arranged in parallel each containing either a removable filter bag or cartridge ($A_1$ and $B_1$) the vessels being located in the circulation line of a pump (P) which pumps the liquid from a bulk storage vessel (R) through only one filter vessel at a time, this being controlled by a valve system in the circulation line to the filter vessels, liquid forced through the filter vessel in use being pumped to a storage vessel (R) via a non-return valve ($NR_A$, $NR_B$) located in the outlet line from each filter vessel, the system being characterised in that the outlet of each filter vessel has a branch connection to a shuttle valve (S), the outlet from which is connected via a non-return ($NR_S$) to the suction side of the pump (P), whereby when liquid is being pumped through one filter vessel the shuttle valve is shut against the flow of liquid therethrough but is open on the other side so that liquid can be sucked out of the other filter vessel.

2. A pressurised filtration system according to claim 1 characterised in that the valve system in the liquid circulation line to control the liquid entry to the filter vessels comprises an electrically controlled solenoid valve (VA, VB) in te liquid entry line to each filter vessel.

3. A pressurised filtration system according to either claim 1 or claim 2 characterised in that each of the filter vessels is provided with a pressure sensitive switch (SA, SB) which is used to detect and indicate when a filter vessel is too full of solid.

4. A pressurised filtration system according to claim 3 characterised in that means (Z) are connected to the pressure sensitive switches (SA, SB) to operate the valve system in the liquid circulation line to shut off one filter vessel and to pump the liquid through the other filter vessel.

5. A pressurised filtration system according to any one of claims 1 to 4 characterised in that means are provided to shut down the pump and so stop the liquid circulating if the bags or cartridges in both filter vessels are too full.

6. A pressurised filtration system according to any one of claims 1 to 5 characterised in that the non-return valves in the liquide exit lines of the two filter vessels and of the shuttle valve are floating non-return valves ($NR_A$, $NR_S$, $NR_B$).

7. A pressurised filtration system according to any one of claims 1 to 6 characterised in that each filter vessels has attached thereto a vacuum braking non-return air valve (1A, 1B).

## Revendications

1. Système filtrant sous pression pour l'élimination des matières solides en suspension dans un liquide, constitué par deux récipients de filtrage (A et B) enfermés et disposés parallèlement qui contiennent respectivement soit un sac de filtrage amovible, soit une cartouche amovile ($A_1$ et $B_1$) et sont installés dans la conduite de circulation d'une pompe (P) ne pompant le liquide d'un réservoir principal (R) à chaque fois qu'à travers un seul récipient de filtrage, cela étant commandé par un système de valves placées dans la conduite de circulation allant aux récipients de filtrage, le liquide refoulé à travers le récipient de filtrage se trouvant en service étant pompé dans un reservoir (R) oar l'intermédiaire d'une valve antiretour ($NR_A$, $NB_B$) installée dans la conduite de sortie du récipient de filtrage à chaque fois considéré, caractérisé par le fait que la sortie de chaque récipient de filtrage comporte une tubulure de raccordement allant à une valve oscillante (S) dont la sortie est reliée au côté aspiration de la pompe (P) par l'intermédiaire d'une valve antiratour (NRS) de telle sorte qu'en cas de pompage de liquide à travers l'un des récipients de filtrage, la valve oscillante soit fermée à tout écoulement de liquide la traversant, mais soit ouverte de l'autre côté de façon que du liquide puisse être aspiré de l'autre récipient de filtrage.

2. Système filtrant sous pression selon la revendication 1, caractérisé par le fait que le système de valves placées dans le conduite de circulation pour la commande de l'amenée de liquide aux récipients de filtrage comprend une valve magnétique (VA, VB) commandée électriquement et installée dans la conduie d'amenée de liquide allant à chaque récipient de filtrage.

3. Système filtrant sous pression selon la revendication 1 ou 2, caractérisé par le fait qu'à chaque récipient de filtrage est associé un contact à pression (SA, SB) qui sert à déterminer et à signaler le moment où un récipient de filtrage est trop plein de matière solide.

4. Système filtrat sous pression selon la revendication 3, caractérisé par le fait que des dispositifs (Z) pour l'actionnement du système de valves placées dans la conduite de circulation de liquide sont raccordés aux contacts à pression pour bloquer l'un des récipients de filtrage et pomper le liquide à travers l'autre récipient de filtrage.

5. Système filtrant sous pression selon l'une des revendications 1 à 4, caractérisé par le fait qu'il est prévu des dispositifs pour arrêter la pompe et interrompre ainsi la circulation du liquide lorsque les sacs ou les cartouches des deux récipients de filtrage sont trop pleins.

6. Système filtrant sous pression selon l'une des revendications 1 à 5, caractérisé par le fait que les valves antiretour dans les conduites de sortie de liquide des deux récipients de filtrage et de la valve oscillante sont des valves antiretour à flotteur (NR$_A$, NR$_S$, NR$_B$).

7. Système filtrant sous pression selon l'une des revendications 1 à 6, caractérisé par le fait que sur chaque récipient de filtrage est montée une valve à air antiretour (1A, 1B) empêchant la création d'un vide.